# EUROPÄISCHE PATENTSCHRIFT

(11) **EP 0 522 627 B1**
(45) Veröffentlichungstag und Bekanntmachung des Hinweises auf die Patenterteilung: **06.09.1995**
(21) Anmeldenummer: 92201897.3
(22) Anmeldetag: 26.06.1992
(51) Int. Cl.: C09K 11/06

(54) **Lumineszenzfähiger Stoff**
Luminescent material
Matériau luminescent

(30) Priorität: 03.07.1991 DE 4122009
(43) Veröffentlichungstag der Anmeldung: 13.01.1993
(73) Patentinhaber: Philips Patentverwaltung GmbH, 22335 Hamburg (DE); Philips Electronics N.V., 5621 BA Eindhoven (NL)
(72) Erfinder: Bredol, Michael, Dr., c/o Philips Patentverw. GmbH, W-2000 Hamburg 1 (DE); Kynast, Ulrich, Dr., c/o Philips Patentverw. GmbH, W-2000 Hamburg 1 (DE); Ronda, Cornelis, Dr., c/o Philips Patentverw. GmbH, W-2000 Hamburg 1 (DE); Welker, Thomas, Dr., c/o Philips Patentverw. GmbH, W-2000 Hamburg 1 (DE)
(74) Vertreter: Rooda, Hans

(56) Entgegenhaltungen:
- FR-A- 2 450 865
- US-A- 4 880 761
- CHEMICAL ABSTRACTS, vol. 84, Columbus, Ohio, US; CHUPAKHINA, R.A. et al.: "luminescent compounds of europium(3+) and terbium(3+) with some organic ***ligands***"

## Beschreibung

Die Erfindung bezieht sich auf einen lumineszenzfähigen Stoff, bei welchem in Hohlräume von Zeolithen Ionen eines Seltenerdmetalls eingebracht sind und ein Verfahren zu seiner Herstellung.

Gemäß Journal of Luminescence 20 (1979), Seiten 325 bis 327 ist es bekannt, daß Y-Zeolithe mit in den Hohlräumen eingebrachten Europium-Ionen zu schwacher Lumineszenz anregbar sind.

Der Erfindung liegt die Aufgabe zugrunde, die Quantenausbeute zu steigern und damit bei gegebener anregender Strahlungsenergie das Ausmaß der Lumineszenz zu erhöhen.

Die Lösung gelingt dadurch, daß die Ionen des Seltenerdmetalls mit in die Hohlräume des Zeolithen eingebrachten Liganden Komplexe bilden, wobei die Liganden hinsichtlich ihrer elektronischen Struktur derart gewählt sind, daß sie anregende elektromagnetische Strahlung in einem Wellenlängenbereich unterhalb der Lumineszenzstrahlung des Seltenerdmetalls mit hoher Umwandlungseffizienz zu absorbieren vermögen, und daß das Triplettniveau der Liganden oberhalb des emittierenden Niveaus des Seltenerdmetalls liegt.

Zeolithe sind hochporöse Aluminosilikate, die zumeist mit einem hohen Wassergehalt anfallen. Aufgrund der Anwesenheit von AlO₂⁻ - Einheiten weisen sie ladungskompensierende organische oder anorganische Kationen auf, mittels welcher selektiv die adsorptiven Eigenschaften der Zeolithe beeinflußt werden können. Durch übliche Ionenaustauschtechniken lassen sich auch Seltenerdmetallionen in die Zeolithe einbauen, wodurch z.B. deren Temperaturstabilität verbessert wird. Im eingangs genannten bekannten Fall wurde festgestellt, daß ein blau lumineszierender Leuchtstoff entsteht. Allerdings wurde nur eine sehr geringe Quantenausbeute erreicht, so daß solche Stoffe nicht für praktische Anwendungen als Phosphore für Kathodenstrahlröhren, Röntgenbildverstärker, Leuchtstoffröhren, Displays usw. geeignet sind.

Für solche Zwecke gebräuchliche Phosphore sind typischerweise sulfidische, oxidische, oxihalogenidische oder oxisulfidische anorganische Festkörper, welche auch aus komplexen anorganischen Anionen (z.B. Silikaten, Phosphaten, Boraten, Wolframaten) und Metallkationen bestehen können.

Es ist auch bekannt, daß Verbindungen, in denen das lumineszierende Ion in einer Koordinationsmatrix aus organischen Liganden aufgespannt ist, als Lasermaterialien und auch als effiziente Leuchtstoffe verwendbar sind (DE-C 30 50 703).

Als Phosphore insbesondere für Beleuchtungszwecke sind solche Komplexe besonders geeignet, die aufgrund der elektronischen Struktur der Liganden zu starker Absorption anregender UV-Strahlung befähigt sind. Im Falle der UV-Anregung durch ein Niederdruck-Quecksilberplasma (Leuchtstoffröhre) konnten insbesondere die Anionen aromatischer Carboxylate als effektive Absorber mit hoher Umwandlungseffizienz identifiziert werden. Die thermische und/oder chemische Stabilität insbesondere von mit organischen Liganden aufgebauten Phosphoren ist allerdings gering.

Bei erfindungsgemäß aufgebauten lumineszenzfähigen Stoffen sind Komplexe molekularer Größenordnung, welche Strahlung zu absorbieren und in Lumineszenzstrahlung umzuwandeln vermögen, in den Hohlräumen von Zeolithen gegen physikalische und/oder chemische Angriffe geschützt. Die Komplexe sind beispielsweise gegen ein Quecksilberplasma abgeschirmt. Auch können strahlungsinduzierte intermolekulare Reaktionen weitgehend ausgeschlossen werden. Gegenüber den ohne Zeolith aus reinem Festkörpermaterial bestehenden lumineszenzfähigen Komplexen ergibt sich der Vorteil, daß erfindungsgemäße luminenzfähige Stoffe ein herkömmlichen Phosphoren vergleichbares Suspensionsverhalten zeigen, so daß sie mit bewährten Verfahren auf tragenden Flächen aufbringbar sind.

Während die Einbringung reiner Seltenerdmetallionen in Zeolithe - vermutlich infolge von in diesen oberflächenreichen Materialien wirksamen Oberflächenkillerzentren - nur zu geringer Lumineszenz führt, hat sich überraschend gezeigt, daß man durch Abschirmung der Seltenerdmetalle mittels angebundener Liganden die Wirkung solcher Oberflächenkillerzentren weitgehend ausschalten kann, so daß die Quantenausbeute vervielfacht wird. Erfindungsgemäß aufgebaute lumineszenzfähige Stoffe sind deshalb als preisgünstige Alternativstoffe vielfältig industriell nutzbar.

Da die erfindungsgemäß in die Hohlräume der Zeolithe eingebrachten Lumineszenzmaterialien ein kleines Volumen molekularer Dimension und somit eine hohe Oberflächenwirksamkeit haben, können die Lumineszenzeigenschaften durch Auswahl geeigneter Liganden einfach und sogar durch direkte chemische Manipulation beeinflußt werden.

Als Zeolithe können prinzipiell beliebige bekannte Arten verwendet werden (vgl. W.M. Meyer und D.H. Olsen: "Atlas of Zeolite structure types" Butterworth 1987). Natürlich sind auch Zeolithabkömmlinge wie Silikoalumophosphat (SAPO) oder Aluminophosphat (AlPO) geeignet. Die verwendeten Zeolithe sollten für die anregende Strahlung transparent sein, damit die Zeolith-Materialien keine Abdämpfung der anregenden Strahlung verursachen. Für spezielle lumineszierende und erfindungsgemäß an Liganden gebundene Komplexe sind solche Zeolithe besonders geeignet, deren Hohlräume genügend groß sind, um entsprechende Komplexe einbringen zu können. Die physikalische und/oder chemische Stabilität eines erfindungsgemäßen lumineszenzfähigen Stoffes wird dadurch verbessert, daß Zeolithe mit großen Hohlräumen gewählt werden. Besonders gute Ergebnisse wurden mit Y-Zeolithen erzielt.

Als in die Hohlräume der Zeolithe einzubringende und Seltenerdmetallionen enthaltende Komplexe sind solche geeignet, die auch als reine Festkörper außerhalb vom Zeolithen befriedigende Lumineszenzeigenschaften zeigen. Auch Komplexe, die im Reinzustand von ihrer chemischen Natur her als Polymere anzusprechen sind, erwiesen sich als geeignet, wenn sie durch Umwandlung in monomere oder oligomere Struktur und damit bei verkleinerter molekularer Größe in die relativ engen Hohlräume der Zeolithe eingebracht wurden.

Durch die Erfindung wurde bei einer Vielzahl von Zuordnungen von Arten der Zeolithe und der an verschiedenartige Seltenerdmetalle gebundenen Liganden eine Quantenausbeute erreicht, welche um ein Vielfaches höher ist, als beim Einbau reiner Seltenerdmetallionen in Zeolithe. Die erreichbaren Quantenausbeuten nähern sich den Werten,
welche für die betreffenden Komplexe in Festkörperform erreichbar sind.

Besonders gute Quantenausbeuten ergaben sich mit organischen Liganden und insbesondere mit aromatischen Carboxylaten. Auch konjugierte aromatische Verbindungen erwiesen sich als vorteilhaft verwendbare Liganden. Insbesondere organische Aromaten weisen große Absorptionskoeffizienten im interessierenden Bereich auf. Bei der besonders vorteilhaften Kombination von Seltenerdmetallionen und Carboxylat ist bedeutsam, daß der Ligand keine lumineszenzlöschenden energetischen Zustände unterhalb des emittierenden Seltenerdion-Niveaus besitzt. Eine unerwünschte lumineszenzlöschende Wirkung ergibt sich dagegen beispielsweise bei Tb-cinnamat (Tb(O₂C-CH=CH-C₆H₅)₃), welches bereits im Reinzustand keine nennenswerte Lumineszenz zeigt. Dagegen erhält man bei Tb-benzoat (Tb(O₂C-C₅H₅)₃) eine nahezu vollständige Quantenumwandlung bei gleichzeitig starker UV-Absorption unterhalb 320 nm Wellenlänge.

Während man bei Tb-dotierten Zeolithen selbst nach Ausheizen im Temperaturbereich bis 800 C nur eine Quantenausbeute von weniger als 5% erhielt, ergaben sich erfindungsgemäß dagegen mehr als 25 %, wenn Tb³⁺ z.B. als Benzoat in die Hohlräume eines Y-Zeolithen eingebracht wurde. Für dieses Beispiel wurden Absorptionsmaxima bei den Wellenlängen von etwa 260 und 300 nm gemessen, wie es für gelöstes Tb-Benzoat bekannt ist. Weiterhin ergab sich ein ausgeprägtes Maximum der Lumineszenz bei einer Wellenlänge von ca. 550 nm, wie es für Tb charakteristisch ist.

Dem Fachmann sind zahlreiche Ionenaustausch-Verfahren bekannt, mittels welcher für die Erfindung geeignete Seltenerdmetall-Komplexe in Hohlräume von Zeolithen eingebracht werden können. Es ist weiterhin möglich, den Transport der Liganden durch Sublimation zu bewirken.

Insbesondere im Falle von Tb-benzoat ist es besonders vorteilhaft, zunächst durch Ionenaustausch Tb³⁺ in Y-Zeolith einzubringen und nach Erhitzen am Rückfluß mit Benzoylchlorid Tb-benzoat zu bilden. Unumgesetzter Komplexbildner kann anschließend durch Extraktion mit z.B. trockenem Hexan, Dimethylformamid oder Diethylether entfernt werden. Im Falle der Verwendung von Dimethylformamid ist dabei zu beachten, daß darin Tb-benzoat gut löslich ist.

Im einzelnen wurde Tb-benzoat auf folgende Weise in die Hohlräume von Y-Zeolith eingebracht:
1,145 g TbCl₃*6H₂O wurden mit 2,98 g Zeolith NaY*xH₂O in 250 ml H₂O gemischt. Der pH-Wert wurde mittels HNO₃ auf einen Wert zwischen 5 und 6 eingestellt. Diese Mischung wurde ca. 3 Std. am Rückfluß erhitz, weitere 72 Std. bei Raumtemperatur gerührt, wobei auf der Flüssigkeitsoberfläche sich bildende nicht benetzbare Bestandteile abdekantiert wurden. Auf diese Weise wurden die Na⁺Ionen des Zeoliths durch Tb³⁺Ionen ersetzt. Sodann wurde der Zeolith von der Hauptmenge Lösungsmittel abfiltriert und bei 100 C einige Stunden getrocknet. 0,5 g des die Tb-Ionen enthaltenden Zeolithen wurden mit 5ml Benzoylchlorid weitere 3 Std. unter Rückfluß gekocht und anschließend mehrmals mit einem Lösungsmittel (n-Hexan) gewaschen. Schließlich wurde das Produkt mehrere Stunden im Vakuum getrocknet. Das Ergebnis war ein lumineszenzfähiger Stoff, bei welchem in die Hohlräume des Zeolithen ein Tb-benzoat (Tb (C₆H₅COO)₃) entstanden war.

Dieses Beispiel wurde zur Veranschaulichung der Erfindung näher erläutert. Dem Fachmann sind jedoch ohne nähere Hinweise Verfahren geläufig, mit welchen erfindungsgemäße lumineszenzfähige Stoffe herstellbar sind.

## Patentansprüche

1. Lumineszenzfähiger Stoff, bei welchem in Hohlräume von Zeolithen Ionen eines Seltenerdmetalls eingebracht sind,
dadurch gekennzeichnet, daß die Ionen des Seltenerdmetalls mit in die Hohlräume des Zeolithen eingebrachten Liganden Komplexe bilden, wobei die Liganden hinsichtlich ihrer elektronischen Struktur derart gewählt sind, daß sie anregende elektromagnetische Strahlung in einem wellenlängenbereich unterhalb der Lumineszenzstrahlung des Seltenerdmetalls mit hoher Umwandlungseffizienz zu absorbieren vermögen, und daß das Triplettniveau der Liganden oberhalb des emittierenden Niveaus des Seltenerdmetalls liegt.

2. Lumineszenzfähiger Stoff,
dadurch gekennzeichnet, daß der Zeolith für die anregende Strahlung transparent ist.

3. Lumineszenzfähiger Stoff nach Anspruch 1 oder 2,
dadurch gekennzeichnet, daß der Ligand organisch ist.

4. Lumineszenzfähiger Stoff nach Anspruch 3,
dadurch gekennzeichnet, daß der Ligand ein aromatisches Carboxylat ist.

5. Lumineszenzfähiger Stoff nach Anspruch 4,
dadurch gekennzeichnet, daß der Ligand mit dem Seltenerdmetall ein Benzoat bildet.

6. Lumineszenzfähiger Stoff nach Anspruch 5,
dadurch gekennzeichnet, daß in die Hohlräume des Zeolithen Komplexe aus Tb-Benzoat eingebracht sind.

7. Lumineszenzfähiger Stoff nach einem der Ansprüche 1 bis 6,
dadurch gekennzeichnet, daß Y-Zeolith verwendet wird.

8. Verfahren zur Herstellung eines lumineszenzfähigen Stoffes nach einem der Ansprüche 1 bis 7,
dadurch gekennzeichnet, daß durch Ionenaustausch zunächst reine Ionen des Seltenerdmetalls in die Hohlräume von Zeolithen eingebracht und danach die Liganden angebunden werden.

9. Verfahren nach Anspruch 8, bei welchem Tb-Benzoat in die Hohlräume von Y-Zeolithen eingebracht wird,
dadurch gekennzeichnet, daß zunächst TbCl₃*H₂O und Zeolith NaY*xH₂O mindestens zwei Stunden in Wasser bei einem insbesondere durch HNO₃ eingestellten pH-Wert von vorzugsweise 5 - 6 erhitzt und nach Abkühlung mindestens 40 Stunden bei Raumtemperatur gerührt werden, wobei sich auf der Oberfläche eventuell bildende nicht benetzbare Bestandteile abdekantiert werden, und daß danach der Zeolith von der Hauptmenge Lösungsmittel abfiltriert und einige Stunden getrocknet wird, und daß der danach in seinen Hohlräumen Tb-Ionen enthaltende Zeolith mindestens zwei weitere Stunden mit Benzoylchlorid unter Rückfluß gekocht, dann mit einem geeigneten Lösungsmittel gewaschen und schließlich mehrere Stunden bei hohem Unterdruck, insbesondere bei Vakuum, getrocknet wird.

## Claims

1. A luminescent material in which ions of a rare earth metal are incorporated in cavities of zeolites, characterized in that the ions of the rare earth metal form complexes with ligands incorporated in the zeolite cavities, which ligands are chosen with respect to their electronic structure such that they can absorb exciting electromagnetic radiation at a high conversion efficiency in a wavelength range below the luminescence radiation of the rare earth metal, and in that the triplet level of the ligands is above the emissive level of the rare earth metal.

2. A luminescent material, characterized in that the zeolite is transparent to the exciting radiation.

3. A luminescent material as claimed in Claim 1 or 2, characterized in that the ligand is organic.

4. A luminescent material as claimed in Claim 3, characterized in that the ligand is an aromatic carboxylate.

5. A luminescent material as claimed in Claim 4, characterized in that the ligand forms a benzoate with the rare earth metal.

6. A luminescent material as claimed in Claim 5, characterized in that Tb-benzoate complexes are incorporated in the zeolite cavities.

7. A luminescent material as claimed in any one of Claims 1 to 6, characterized in that Y-type zeolite is used.

8. A method of manufacturing a luminescent material as claimed in any one of Claims 1 to 7, characterized in that pure ions of the rare earth metal are incorporated in the zeolite cavities by means of ion exchange and subsequently the ligands are bound thereto.

9. A method as claimed in Claim 8 in which Tb-benzoate is incorporated in the cavities of Y-type zeolites, characterized in that first TBCl₃*H₂O and zeolite NaY*xH₂O are heated for at least two hours in water at a pH value of preferably 5-6, particularly adjusted by means by HNO₃, and after cooling are stirred for at least 40 hours at room temperature, while non-wettable constituents possibly formed on the surface are decanted, in that subsequently the zeolite is filtered off the bulk of the solvent and dried for several hours, and in that subsequently the zeolite comprising Tb ions in its cavities is refluxed for at least two further hours in benzoylchloride, washed with a suitable solvent and finally dried at a strongly reduced pressure, particularly in vacuo, for several hours.

## Revendications

1. Matériau luminescent dans lequel des ions de métal de terre rare sont incorporés dans des cavités de zéolithe, caractérisé en ce que les ions métalliques de terre rare constituent des complexes avec des ligands incorporés dans les cavités de zéolithe, lesdits ligands étant choisis par rapport à leur structure électronique de manière qu'ils puissent absorber du rayonnement d'excitation électromagnétique à une efficacité de conversion élevée dans un domaine de longueurs d'onde inférieur au rayonnement luminescent du métal de terre rare, et en ce que le niveau de triplet des ligands se situe au-dessus du niveau d'émission du métal de terre rare.

2. Matériau luminescent caractérisé en ce que la zéolithe est transparente au rayonnement d'excitation.

3. Matériau luminescent selon la revendication 1 ou 2, caractérisé en ce que le ligand est organique.

4. Matériau luminescent selon la revendication 3, caractérisé en ce que le ligand est un carboxylate aromatique.

5. Matériau luminescent selon la revendication 4, caractérisé en ce que le ligand constitue un benzoate avec le métal de terre rare.

6. Matériau luminescent selon la revendication 5, caractérisé en ce que des complexes de benzoate Tb sont incorporés dans les cavités de zéolithe.

7. Matériau luminescent selon l'une quelconque des revendications 1 à 6, caractérisé en ce que l'on utilise une zéolithe du type Y.

8. Procédé de fabrication d'un matériau luminescent selon l'une quelconque des revendications 1 à 7, caractérisé en ce que d'abord au moyen d'un échange d'ions des ions purs du métal de terre rare sont incorporés dans les cavités de zéolithe et que subséquemment les ligands y sont liés.

9. Procédé selon la revendication 8, suivant lequel du benzoate de Tb est incorporé dans les cavités de zéolithe du type Y, caractérisé en ce que d'abord au moins pendant deux heures le TbCl₃*H₂O et la zéolithe NaY*xH₂0 sont chauffés dans de l'eau présentant un pH avantageusement compris entre 5 et 6 et ajusté notamment au moyen de HNO₃ pour être agités au moins pendant 4 heures après refroidissement jusqu'à la température ambiante, des constituants non humidifiables le cas échéant formés sur la surface étant décantés, et en ce que subséquemment la zéolithe est séparée par filtration de la masse principale de solvant pour être séchée pendant plusieurs heures et en ce que subséquemment on fait bouillir la zéolithe comportant des ions de Tb dans ces cavités en le refluant avec du benzoylchlorure pendant au moins encore deux autres heures pour être lavée encore avec un solvant convenable et être séchée finalement pendant plusieurs heures à une pression très réduite, notamment sous vide.
